(19) **Europäisches Patentamt / European Patent Office / Office européen des brevets**

(11) **EP 4 626 010 A1**

(12) **EUROPEAN PATENT APPLICATION**

(43) Date of publication:
01.10.2025   Bulletin 2025/40

(21) Application number: 25161865.8

(22) Date of filing: 05.03.2025

(51) International Patent Classification (IPC):
*H04N 23/61* (2023.01)      *H04N 23/611* (2023.01)
*H04N 23/62* (2023.01)      *H04N 23/63* (2023.01)
*H04N 23/67* (2023.01)

(52) Cooperative Patent Classification (CPC):
H04N 23/675; H04N 23/61; H04N 23/611;
H04N 23/62; H04N 23/63; H04N 23/635

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2024   JP 2024052295**

(71) Applicant: **CANON KABUSHIKI KAISHA Tokyo 146-8501 (JP)**

(72) Inventor: **TOMOSADA, Toshihiko Tokyo, 146-8501 (JP)**

(74) Representative: **Canon Europe Limited European Intellectual Property Group 4 Roundwood Avenue Stockley Park Uxbridge UB11 1AF (GB)**

(54) **DISPLAY CONTROL APPARATUS, CONTROL METHOD FOR DISPLAY CONTROL APPARATUS, AND STORAGE MEDIUM**

(57)     A display control apparatus includes display control means (207) arranged to display a live view image captured by image capturing means, and to display, superposed on the live view image, a display item representing a subject whose focal state is to be detected; detecting means (210) arranged to detect a plurality of parts of the subject in the live view image; selecting means (207) arranged to select one part from among the plurality of parts detected by the detecting means (210), based on a priority; and focus detecting means (204) arranged to detect a focal state in a focus detection area corresponding to the part selected by the selecting means (207), wherein the selecting means (207) changes a selection method based on the priority between automatic focus adjustment and focus adjustment through manual focus operation.

FIG. 3

```
        FRAME DISPLAY CONTROL
                 │
                 │  S301
        SUBJECT DETECTING PROCESS
                 │
                 │  S302
              ◇ AF? ◇──── MF ──────────────┐
                 │                          │
                AF                          │
                 │  S303                    │  S304
        AF-FRAME SETTING PROCESS    FOCUS-ASSIST-FRAME
                 │                  SETTING PROCESS
                 │◄─────────────────────────┘
                 │  S305
        FOCUS DETECTING PROCESS
                 │
                 │  S306
        FRAME DISPLAY PROCESS
                 │
                END
```

EP 4 626 010 A1

**Description**

BACKGROUND OF THE INVENTION

Field of the Invention

The present invention relates to a display control apparatus, a control method for the display control apparatus, and a storage medium and, in particular, to a technique for displaying information related to focusing.

Description of the Related Art

In focusing devices for high-resolution video cameras compatible with 4K or 8K, it is not easy for the photographers to achieve precise focus on the subject through a manual focusing operation (MF operation). In particular, in focusing while viewing through a viewfinder or panel, there may be instances of out-of-focus to a degree that cannot be detected through the viewfinder or panel. To solve such problems, a display apparatus is proposed which calculates an evaluation value indicating the focal state, and based on the evaluation value, displays the focal state such as a front focus or back focus condition and the degree of out-of-focus of the imaged subject. Such a display function is called a focus assist function. Japanese Patent Laid-Open No. 2016-197179 proposes a method for superimposing an indicator that shows the focal state on the area of the face or pupil of the detected person.

Furthermore, an image capturing apparatus is proposed which includes a means for detecting a more detailed part of the detected subject such as a person, for example, the head, pupils, or body and which performs automatic focusing (AF) based on the amount and direction of defocus detected from the phase difference between the image signals from the area (Japanese Patent Laid-Open No. 2022-128652). In the function for detecting a subject from a captured image, the kind of subjects to be detected has increased, for example, animals such as dogs, cats, and birds and vehicles, in addition to persons.

In focusing through AF or MF operation on detailed parts of the detected subject, as described above, the detection may become unstable, such as variations in the position or size of the detection and frequent change of the detected part, depending on the orientation or size of the subject or the exposure condition of the image capturing apparatus. For example, the detected part may frequently switch between the face and the pupil, resulting in only brief moments where the pupils are detected.

In focusing through AF, focusing on a more detailed part (for example, the pupils) is generally desired. For unstable detection as described above, AF based on the amount and direction of defocus at the detected part is generally performed at the timing of a switching operation for focusing.

In focusing through MF operation using the focus assist function as described above, it is assumed that the user performs the MF operation while observing indicators that show the focal state, such as a front focus or back focus condition and the degree of out-of-focus. In this case, if the position or size of the subject detection varies or the detected part changes frequently, leading to unstable detection, the positions of the indicators become unsettled, making it difficult to focus. In particular, when detecting animals such as dogs or cats, their greater changes in posture and movement compared to persons can cause variations in the position or size of the detection or instability in the detected part. This may lead to an unsettled indicator position, making it more difficult to focus.

SUMMARY OF THE INVENTION

The present invention has been made in consideration of the above situation, and provides a display control apparatus configured to display a stable focal state, a control method for the display control apparatus, and a storage medium.

The present invention in its first aspect provides a display control apparatus as specified in claims 1 to 5.

The present invention in its second aspect provides a control method as specified in claim 6.

The present invention in its third aspect provides a non-transitory computer-readable storage medium as specified in claim 7.

Further features of the present invention will become apparent from the following description of embodiments with reference to the attached drawings.

BRIEF DESCRIPTION OF THE DRAWINGS

Fig. 1 is a block diagram illustrating the configuration of a camera with interchangeable lenses.

Fig. 2A is a diagram illustrating a pixel configuration for a non-imaging-plane phase difference method.

Fig. 2B is a diagram illustrating a pixel configuration for an imaging-plane phase difference method.

Fig. 3 is a flowchart illustrating frame display control processing.

Figs. 4A to 4C are diagrams illustrating a focus detection area.

Figs. 5A to 5C are diagrams illustrating the shape of a focus assist frame.

Fig. 6 is a flowchart illustrating a focus detecting process.

Figs. 7A to 7C are graphs showing image signals obtained from a focus detection area.

Figs. 8A to 8D are graphs illustrating a method for correlation calculation.

Fig. 9 is a flowchart illustrating the processing procedure of an AF-frame setting process according to a first embodiment.

Fig. 10 is a flowchart illustrating the processing procedure of a focus-assist-frame setting process according to the first embodiment.

Figs. 11A to 11F are diagrams illustrating examples of the display forms of an AF frame and a focus assist frame according to the first embodiment.

Fig. 12 is a flowchart illustrating the processing procedure of a focus-assist-frame setting process according to a second embodiment.

Figs. 13A to 13F are diagrams illustrating examples of the display forms of an AF frame and a focus assist frame according to the second embodiment.

Figs. 14A and 14B are diagrams illustrating an example of the display form of a focus guide.

## DESCRIPTION OF THE EMBODIMENTS

The present invention according to embodiments will be described in detail hereinbelow with reference to the accompanying drawings. Each of the embodiments of the present invention described below can be implemented solely or as a combination of a plurality of the embodiments or features thereof where necessary or where the combination of elements or features from individual embodiments in a single embodiment is beneficial.

In the following embodiments, the implementation of the present invention in an image capturing apparatus such as a digital camera will be described. However, the present invention does not necessarily require the image capturing function and may be implemented in any display control apparatus. Such display control apparatuses include computers (personal computers, tablet computers, media players, personal digital assistants (PDAs)), mobile phones, smartphones, game machines, robots, drones, and drive recorders. They are mere examples, and the present invention can be implemented in any other electronic devices.

First Embodiment

Overall Configuration

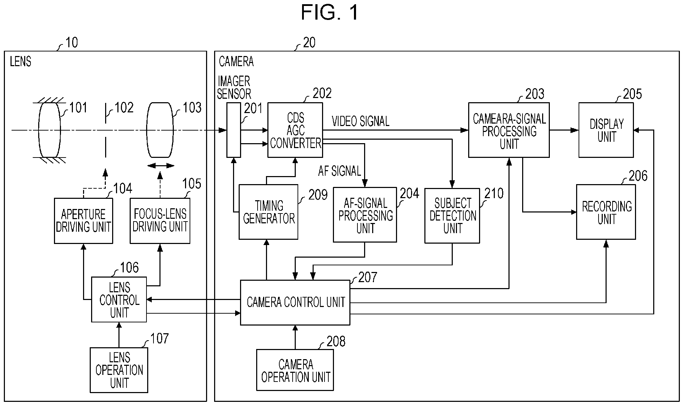

Fig. 1 illustrates an example of the configuration of a camera with interchangeable lenses which is as an example of the display control apparatus according to an embodiment of the present invention. The camera with interchangeable lenses according to this embodiment includes a lens unit and a camera body. A lens control unit 106, which controls the operation of the entire lens unit 10, and a camera control unit 207, which controls the operation of the entire camera, communicate data. The present invention can also be implemented in a digital camera with an integrated lens and camera.

First, the configuration of the lens unit 10 will be described. The lens unit 10 includes an image-capturing optical system including a fixed lens 101, an aperture 102, a focus lens 103, and a zoom lens (not shown). The aperture 102 is driven by an aperture driving unit 104 to control the amount of light incident on an image sensor 201, described below. The focus lens 103 is driven by a focus-lens driving unit 105 to perform focusing. The zoom lens (not shown) is driven by a zoom-lens driving unit to perform zooming in and out. In this embodiment, the zoom lens and the zoom-lens driving unit are not essential components.

The aperture driving unit 104, the focus-lens driving unit 105, and the zoom-lens driving unit are controlled by the lens control unit 106 to determine the amount of opening of the aperture 102 and the positions of the focus lens 103 and the zoom lens, respectively. When focusing or zooming operation is performed by the user through the lens operating unit 107, the lens control unit 106 performs control based on the user's operation. The lens control unit 106 controls the aperture driving unit 104, the focus-lens driving unit 105, and the zoom-lens driving unit according to control instructions and control information received from the camera control unit 207, described below, and sends lens information to the camera control unit 207.

Next, the configuration of a camera body 20 including an automatic focusing apparatus according to this embodiment will be described. The camera body 20 is configured to obtain imaging signals from light beams that have passed through the image-capturing optical system of the lens unit 10. The image sensor 201 is constituted of a charge-coupled device (CCD) or a complementary metal-oxide semiconductor (CMOS) sensor. The light beams that have passed through the image-capturing optical system form an image on the light-receiving surface of the image sensor 201, and the formed subject image is converted into charges (photoelectrically converted) by photodiodes according to the amount of incident light. The charges accumulated in the individual photodiodes are sequentially read from the image sensor 201 as voltage signals according to the charges based on drive pulses provided from a timing generator 209 according to the instructions from the camera control unit 207.

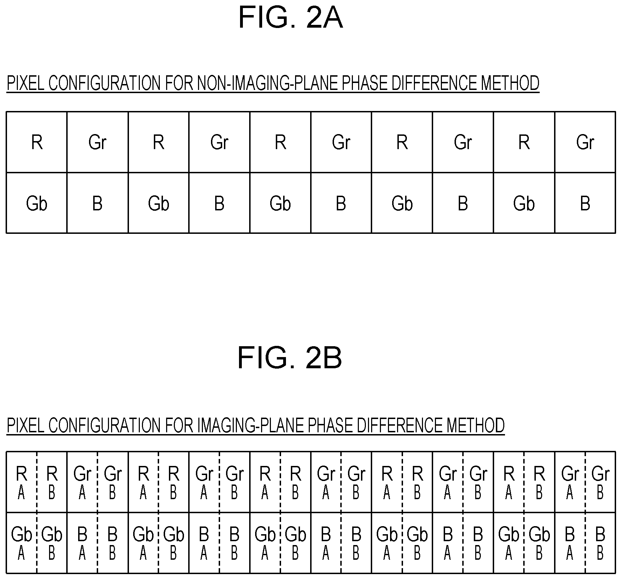

In the case of an image sensor that does not support focusing using an imaging-plane phase difference method (hereinafter, imaging-plane phase difference), the image sensor has a pixel configuration of a Bayer array, as shown in Fig. 2A. In contrast, the image sensor 201 of this embodiment has multiple (in this embodiment, two) photodiodes in a single pixel to perform focus detection using imaging-plane phase difference, as illustrated in Fig. 2B. By separating a light beam with a microlens and forming an image with the two photodiodes, two signals for image capturing and focus detection can be obtained. A signal (A + B) obtained by adding the signals of the two photodiodes serves as an imaging signal. The signals (A and B) from the individual photodiodes serve as two image signals for focus detection. This embodiment is not limited to a configuration in which the two image signals are individually read. For example, the added signal (A + B) and one of the image signals (for example, A) may be read in consideration of the processing load, and the other image signal (for example, B) may be obtained from the difference between the added signal (A + B) and the other image signal (for example, A). An AF-signal processing unit 204, described below, calculates the correlation between the two image signals for focus detection to calculate the amount of image offset and a variety of reliability information.

In this embodiment, one pixel includes two photodiodes. However, the number of photodiodes is not limited to two; the number may be two or more. The configuration of the image sensor for focus detection using imaging-plane phase difference is not limited to the configuration of this embodiment in which one pixel includes multiple photodiodes. The image sensor may include pixels for focus detection.

The imaging signal and the focus detection signals read from the image sensor 201 are input to a clocked double sampling/automatic gain control (CDS/AGC) converter 202, where correlated double sampling for removing reset noise, gain adjustment, signal digitization are performed. The CDS/AGC converter 202 outputs the imaging signal to a camera-signal processing unit 203 and a subject detection unit 210, and the signals for focus detection using imaging-plane phase difference to the AF-signal processing unit 204.

The camera-signal processing unit 203 sends the imaging signal output from the CDS/AGC converter 202 to a display unit 205. The display unit 205 is a display device such as a liquid crystal display (LCD) or an organic electroluminescence (EL) display and displays the imaging signal as a live view image. In an imaging signal recording mode, the imaging signal is recorded in a recording unit 206. The display unit 205 can also display the recorded imaging signal.

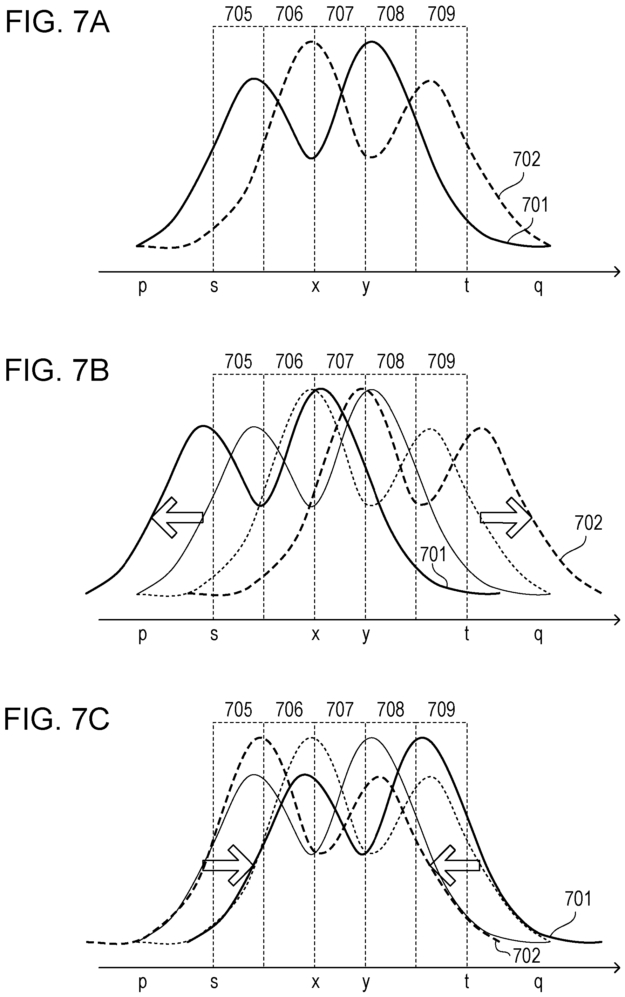

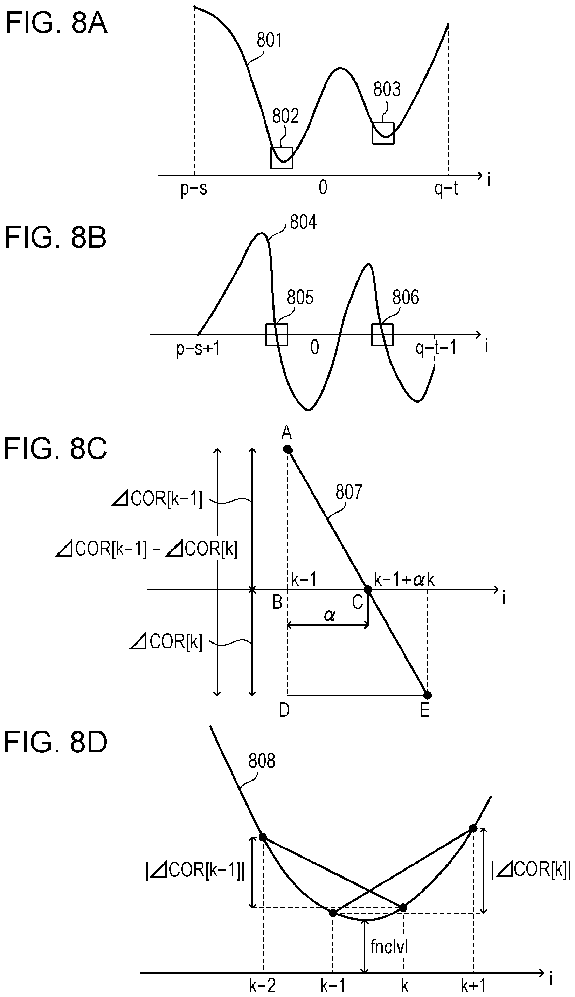

The AF-signal processing unit 204 performs correlation calculation based on the two image signals for focus detection output from the CDS/AGC converter 202 to calculate the amount of image offset and reliability information (two-image matching degree, two-image steepness, contrast information, saturation information, detect information, etc.). The calculated amount of image offset and reliability information are output to the camera control unit 207. The details of the correlation calculation will be described with reference to Figs. 7A to 7C and Figs. 8A to 8D.

The camera control unit 207 exchanges information with the components of the camera body 20 to perform control.

The camera control unit 207 executes not only the processing within the camera body 20 but also camera functions, such as turning the power supply ON/OFF, changing the settings, starting recording, initiating focus detection control, checking recorded images, and selecting a focus detection frame, in response to the user input from a camera operating unit 208. The camera control unit 207 exchanges information with the lens control unit 106 in the lens unit 10 to send the control instructions and control information of the image-capturing optical system and obtains information in the lens unit.

A subject detection unit 210 is a detection block capable of detecting multiple parts, such as the faces, pupils, and bodies of persons, as well as the faces, pupils, and bodies of animals like dogs and cats. The subject detection unit 210 performs known detection processing on the imaging signal output from the CDS/AGC converter 202 to detect a specific subject area within the imaging screen. In other words, the subject detection unit 210 constitutes a detection unit for detecting a predetermined subject from the imaging signal. A method for detection differs from the main purpose of the present invention and is omitted.

Overall Frame Display Control

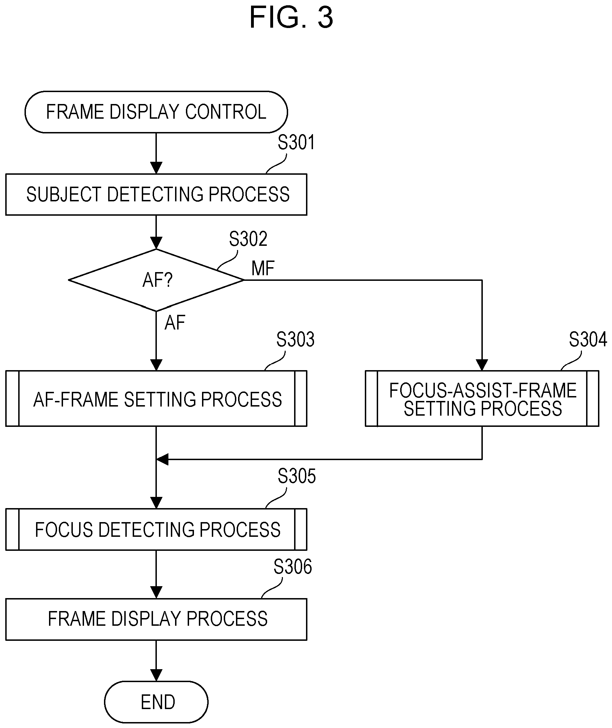

Next, the whole sequence for displaying an AF frame or a focus assist frame on the detected subject executed by of the camera control unit 207 will be described with reference to Fig. 3.

First, in step S301, the camera control unit 207 issues an instruction to detect a specific subject area within the imaging screen to the subject detection unit 210. In this embodiment, the specific subject area refers to the area of the face, pupils, or body (including the whole body) of an animal; however, this is illustrative only. The specific subject area may also be the face, pupils, or body (including the upper body or whole body) of a person, or the entire vehicle or a localized part (for example, the driver's seat) of vehicles such as cars or motorcycles.

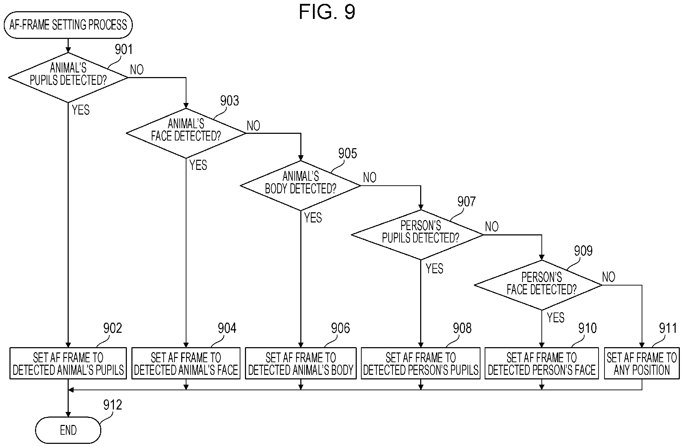

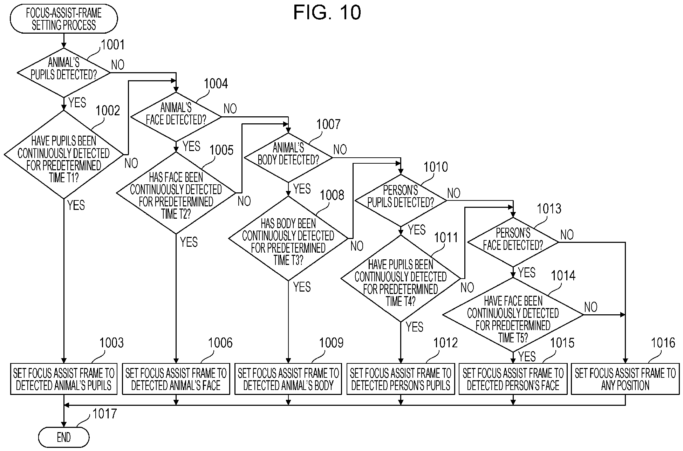

Next, in step S302, the camera control unit 207 determines whether the setting is AF setting or MF setting. In the case of AF setting, in step S303, the camera control unit 207 sets a focus detection area for use in AF focusing (hereinafter referred to as "AF frame") to the AF-signal processing unit 204 and proceeds to step S305. In the case of MF setting, in step S304, the camera control unit 207 sets a focus detection area for use in calculating the amount and direction of defocus serving as an indicator in focusing through the MF operation of the user to the AF-signal processing unit 204 (hereinafter referred to as "focus assist frame") and proceeds to step S305. The details of the AF frame setting process of step S303 will be described with reference to Fig. 9. The details of the focus-assist-frame setting process of step S304 will be described with reference to Fig. 10. In this embodiment, whether the setting is AF setting is determined with reference to an AF/MF switch (not shown) in the camera operating unit 208. However, this is illustrative only; the determination may be made based on the menu selection state, or the AF/MF switch (not shown) may be provided at the lens operating unit 107.

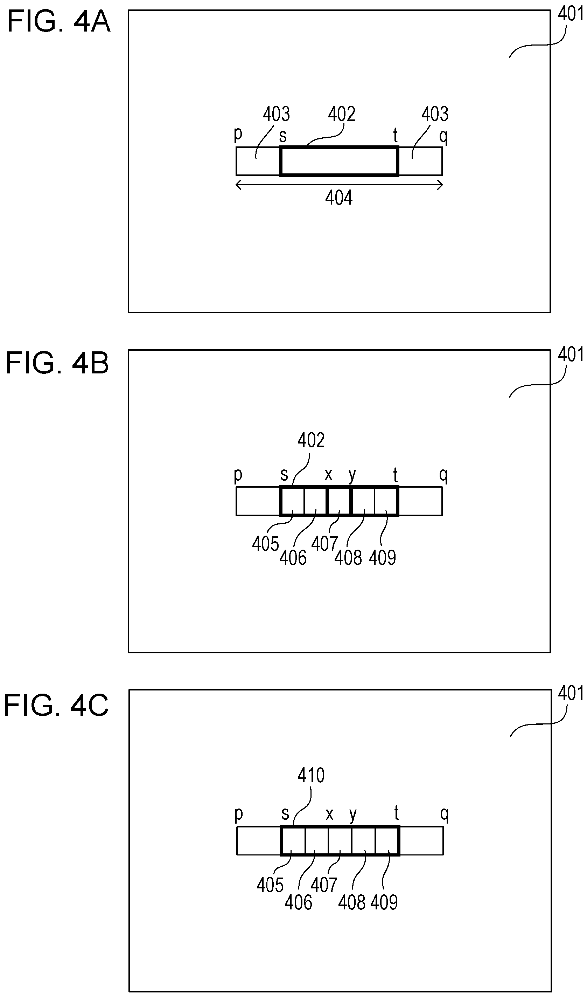

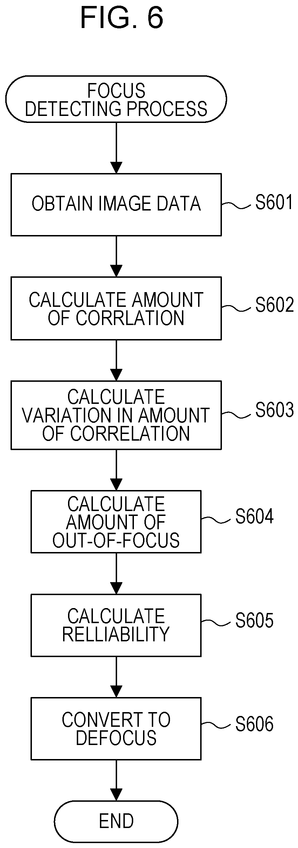

Next, in step S305, the camera control unit 207 performs a focus detecting process using the AF frame set in step S303 or the focus assist frame set in step S304 and proceeds to step S306. In the focus detecting process executed by the AF-signal processing unit 204, it calculates an amount of defocus. The details of the focus detecting process will be described below with reference to Figs. 4A to 4C and Fig. 6.

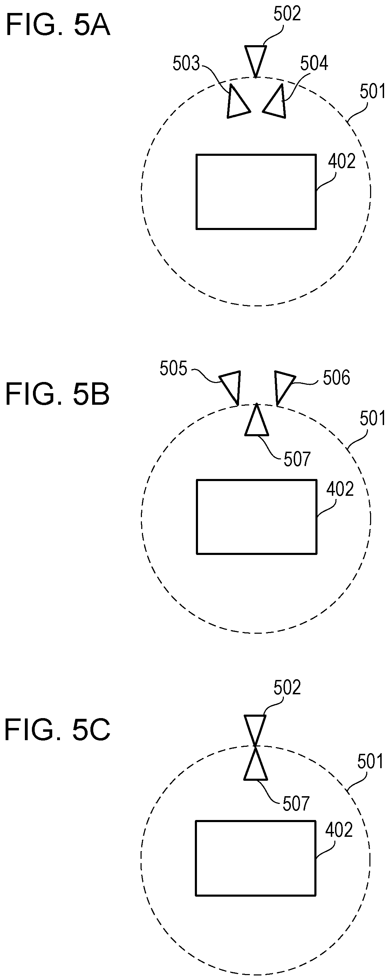

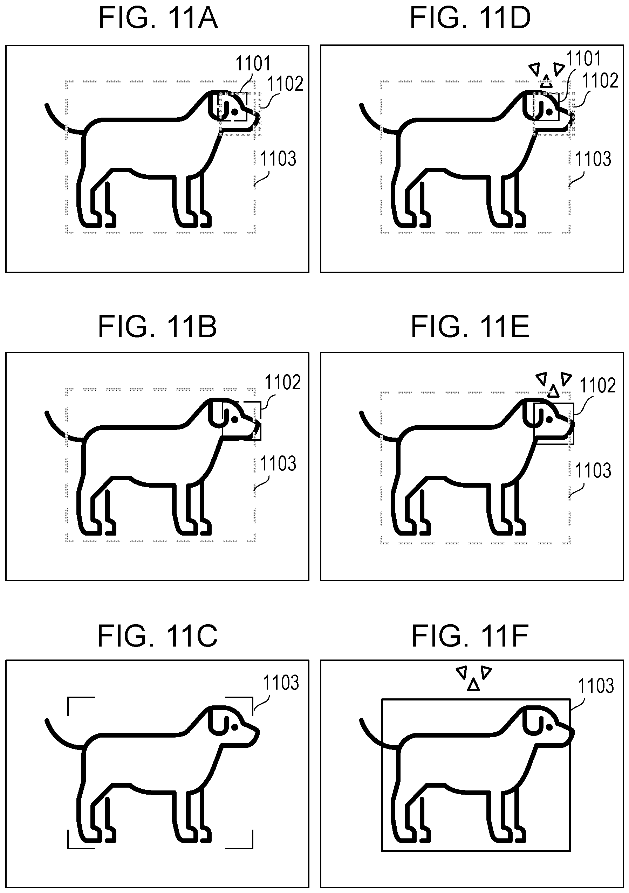

Next, in step S306, the camera control unit 207 performs a display process for showing the AF frame set in step S303 or the focus assist frame set in step S304 to the user and terminates the frame display control. The display forms of the AF frame and the focus assist frame will be described below with reference to Figs. 5A to 5C and Figs. 11A to 11F.

Steps S301 to S306 are cyclically executed based on the operation cycle of the camera.

Defocus-Detection Frame Setting Process

Next, a process for setting a defocus detection area will be described with reference to Figs. 4A to 4C.

Figs. 4A to 4C are diagrams illustrating examples of the area in which the image signals indicating the focus detection range used in the focus detecting process of step S305 are obtained. Fig. 4A is a diagram illustrating a focus detection range 402 on a pixel array 401. An area 404 necessary for correlation calculation is a combined area of the focus detection range 402 and shift areas 403 necessary for correlation calculation. Reference signs p, q, s, and t in Fig. 4A denote coordinates in the x-axis direction. The range from p to q indicates the area 404. The range from s to t indicates the focus detection range 402.

Fig. 4B is a diagram illustrating focus detection areas 405 to 409 obtained by dividing the focus detection range 402 into five. In one example, this embodiment calculates the amount of out-of-focus in units of focus detection area to perform focus detection. In this embodiment, the focus detection result of the most reliable area is selected from the divided multiple focus detection areas. The amount of out-of-focus calculated for the area is used for driving the focus to an in-focus position through AF (AF control) or displaying the amount of out-of-focus on the screen as a focus assist display. The number and direction of divisions of the focus detection range are not limited to the above examples.

Fig. 4C is a diagram illustrating a virtual focus detection area 410 in which the focus detection areas 405 to 409 in Fig. 4B are connected. In one example of the embodiment, the amount of out-of-focus calculated from the area in which the focus detection areas are connected may be used for AF control or for displaying the amount of out-of-focus on the screen as a focus assist display.

In the above description, the focus detection range 402 is set for a fixed-size AF frame or focus assist frame. However, in the following description, the arrangement or size of the focus detection area is varied according to the position or size of the subject area (face, pupils, or body) detected in step S301. The arrangement, size, etc. of the focus detection area are not limited to those described in this embodiment and may take any form that does not depart from the scope of the present invention. Focus-Assist-Frame Display Format

Next, a focus-assist-frame display format in this embodiment will be described with reference to Figs. 5A to 5C.

Reference sign 402 denotes an example of a display item showing the focus assist frame, which is the same area as the focus detection range in Fig. 4 described above.

Dashed line 501 is a line along the movement of figures 502 to 507, described below. The dashed line 501 is not displayed on a liquid-crystal monitor.

Figures 502 to 507 are indicators (display items) used to visually express the amount and direction of defocus.

The state of defocus will be described in detail with reference to Figs. 5A to 5C.

Fig. 5A is a diagram expressing the defocus when the focus is closest to the subject in the focus detection range 402 (front focus). When the focus is at the closest distance, the indicator 502 does not move, and the indicators 503 and 504 move along the dashed line 501 symmetrically along the center line according to the amount of defocus. The larger the defocus, the further the indicators 503 and 504 move away from the indicator 502.

Next, Fig. 5B is a diagram expressing the defocus when the focus is at infinity with respect to the subject in the focus detection range 402 (back focus). When the focus is at infinity, the indicator 507 does not move, and the indicators 505 and 506 move along the dashed line 501 symmetrically about the center line according to the amount of defocus. The larger the defocus, the further the indicators 505 and 506 move away from the indicator 507. Thus, the amount of defocus is expressed by varying the distance between the indicators (varying the relative positions of the indicators), and the focus direction is expressed by varying the directions of the indicators.

Fig. 5C is a diagram expressing the defocus when the focus is at in-focus position with respect to the subject in the focus detection range 402. When the focus is at in-focus position, the indicator 502 and the indicator 507 are closest to each other.

In the above description, the amount of defocus is expressed by varying the relative positions of first (503/505) and second indicators (504/506) as the display of the front focus and the back focus, and the defocus direction is expressed using the directions of the first indicator and the second indicator.

However, the focus-assist-frame display format of this embodiment may be any format that allows the amount of defocus and the direction of defocus to be visually seen. For example, a frame showing the in-focus state according to the amount of defocus may be separately displayed. In this case, in the in-focus state, the focus frame and the frame showing the in-focus state are displayed so as to overlap. In a state determined to be in focus, the frame may be displayed in a different color (for example, green) from a color in another display form (for example, white). When the in-focus state is unclear, a display item representing the unclearness may be displayed.

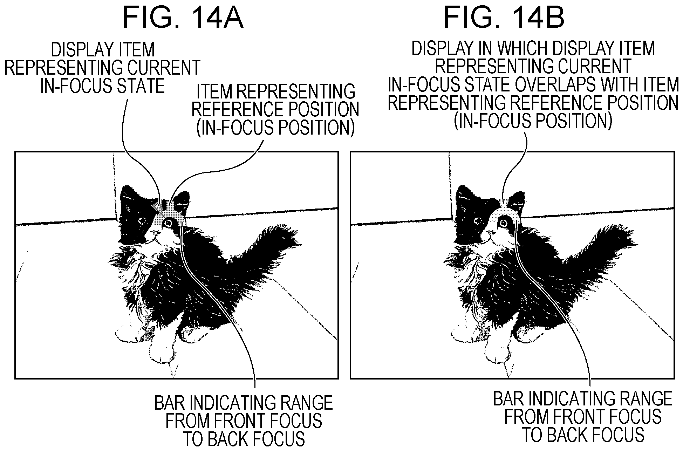

The present invention is also applicable to a display form as in Figs. 14A and 14B which displays a bar indicating the range from front focus to back focus, a display item representing the current in-focus state, and a display item representing the reference position (in-focus position). Although Figs. 14A and 14B do not have a display like the focus detection range 402 in Fig. 5, which part of the pupils, face, and whole body (body) of the dog is in in-focus state can be seen from the positional relationship among the bar, the display item, and the parts of the subject. Specifically, it can be seen that the in-focus state of a part close to the display item is illustrated on the screen.

Defocus Detecting Process

Next, the focus detecting process using phase difference for calculating the defocus in step S305 of Fig. 3 will be described with reference to Fig. 6.

First, in step S601, the camera control unit 207 obtains a pair of image signals from an arbitrarily set focus detection range.

Second, in step S602, the camera control unit 207 calculates the amount of correlation from the pair of image signals obtained in step S601.

Next, in step S603, the camera control unit 207 calculates a variation in the amount of correlation from the amount of correlation calculated in step S602.

Next, in step S604, the camera control unit 207 calculates the amount of out-of-focus from the variation in the amount of correlation calculated in step S603.

Next, in step S605, the camera control unit 207 calculates reliability that indicates how reliable the amount of out-of-focus calculated in step S604 is.

Steps S601 to S605 are performed by the number of focus detection areas within the focus detection range.

Next, in step S606, the camera control unit 207 converts the amount of out-of-focus to the amount of defocus for each focus detection area.

Details of Correlation Calculation

Next, the focus detecting process using phase difference described in Fig. 6 will be described in detail with reference to Figs. 7A to 7C and Figs. 8A to 8D.

Figs.7A to 7C are graphs showing image signals obtained from the focus detection area set in Figs. 4A to 4C. The range from s to t represents the focus detection range, and the range from p to q represents a range necessary for focus detection calculation based on the amount of shift.

The range from x to y represents one of the divided focus detection areas.

Fig. 7A is a graph showing the image signals before being shifted in waveform. A solid line 701 represents the image signal A, and a dashed line 702 represents the image signal B. Areas 705 to 709 represent the focus detection areas divided in Fig. 4B.

Fig. 7B is a graph showing the image waveform of Fig. 7A shifted in the positive direction compared to the waveform before the shift. Fig. 7C is a graph showing the image waveform of Fig. 7A shifted in the negative direction compared to the waveform before the shift. In calculating the amount of correlation, the image signal A (701) and the image signal B (702) are each shifted in the directions of arrows.

Next, a method for calculating the amount of correlation COR will be described. First, as described with reference to Figs. 7B and 7C, the image signal A and the image signal B are shifted by one bit, as described with reference to Figs. 7B and 7C, and the sum of the absolute values of the differences between the image signal A and the image signal B is calculated. The amount of correlation COR can be calculated using Eq. (1).
[Eq. 1]

$$COR[i] = \sum_{k=x}^{y} |A[k+i] - B[k-i]| \qquad (1)$$

$$\{(p-s) < i < (q-t)\}$$

where i is the shift amount, p-s (Figs. 7B and 7C) is the minimum shift amount, q-t (Figs. 7B and 7C) is the maximum shift amount, x is the start coordinate of the focus detection area, and y is the end coordinate of the focus detection area.

Fig. 8A is a graph showing the amount of correlation COR in waveform. The horizontal axis in the graph indicates the shift amount, and the vertical axis indicates the amount of correlation COR. In a correlation amount waveform 801, reference numerals 802 and 803 represent the vicinity of extreme values.

Among them, the smaller the amount of correlation, the higher the degree of alignment between the images A and B.

Next, a method for calculating a variation in the amount of correlation, ΔCOR, will be described. First, the variation in the amount of correlation ΔCOR is calculated from the difference between the amounts of correlation before and after the shift in the correlation amount waveform in Fig. 8A. The variation in the amount of correlation ΔCOR can be calculated using Eq. (2).
[Eq. 2]

$$\triangle COR[i] = COR[i-1] - COR[i+1]$$

$$\{(p-s+1) < i < (q-t-1)\} \qquad (2)$$

where, i is the shift amount, p-s (Figs. 7B and 7C) is the minimum shift amount, and q-t (Figs. 7B and 7C) is the maximum shift amount.

Fig. 8B is a graph showing the variation in the amount of correlation ΔCOR in waveform. The horizontal axis in the graph indicates the shift amount, and the vertical axis indicated the variation in the amount of correlation ΔCOR. In a correlation amount variation waveform 804, reference numerals 805 and 806 denote the vicinity where the variation in the amount of correlation shifts from plus to minus. The part 805 where the variation in the amount of correlation becomes 0 is called as a zero-cross, where the images A and B have the highest degree of alignment, and the shift amount at that point represents the amount of out-of-focus.

Fig. 8C is an enlarged view of the part 805 in Fig. 8B. Reference sign 807 indicates part of the correlation amount variation waveform 804. Referring to Fig. 8C, a method for calculating the amount of out-of-focus PRD will be described. The amount of out-of-focus PRD is divided into an integer part β and a fractional part α. The fractional part α can be calculated using Eq. (3) based on the similarity relationship between a triangle ABC and a triangle ADE in Fig. 8C.
[Eq. 3]

$$AB : AD = BC : DE$$

$$\triangle COR[k-1] : \triangle COR[k-1] - \triangle COR[k] = \alpha : k - (k-1)$$

$$\alpha = \frac{\triangle COR[k-1]}{\triangle COR[k-1] - \triangle COR[k]} \qquad (3)$$

The integer part β can be calculated using Eq. (4) based on Fig. 8C. [Eq. 4]

$$\beta = k - 1 \qquad (4)$$

The amount of out-of-focus PRD can be calculated from the sum of α and β.

When multiple zero-crosses are present as in Fig. 8B, a zero-cross point having high steepness maxder (hereinafter referred to as steepness) in variation in the amount of correlation is referred to as a first zero-cross. The steepness is an indicator showing the ease of AF. A higher value indicates an easier AF point. The steepness can be calculated using Eq. (5).
[Eq. 5]

$$\max der = |\angle COR[k-1]| + |\angle COR[k]| \qquad (5)$$

When multiple zero-crosses are present as described above, the first zero-cross is determined based on the steepness.

Next, a method for calculating the reliability of the amount of out-of-focus will be described. The reliability can be defined by the steepness or the degree of alignment, fnclvl, between the image signals A and B (hereinafter referred to as "the degree of alignment between two images"). The degree of alignment between two images is an indicator showing the accuracy of the amount of out-of-focus, and the smaller the value, the higher the accuracy.

Fig. 8D is an enlarged view of part 802 in Fig. 8A, in which 808 denotes part of the correlation amount waveform 801. The degree of alignment between two images can be calculated by Eq. (6). [Eq. 6]

$$\text{If } (i)\, |\angle COR[k-1]| \times 2 \le \max der$$
$$fnclvl = COR[k-1] + \angle COR[k-1]/4 \qquad (6)$$

$$\text{If } (ii)\, |\angle COR[k-1]| \times 2 > \max der$$
$$fnclvl = COR[k] - \angle COR[k]/4$$

AF-Frame Setting Process and Focus-Assist-Frame Setting Process according to First Embodiment

Next, an AF-frame setting process performed during AF setting and a focus-assist-frame setting process performed during MF setting, which are characteristic processes of the present invention, will be described with reference to the flowcharts of Figs. 9 and 10, respectively.

Fig. 9 illustrates the processing procedure of the AF-frame setting process performed during AF setting.

First, in step S901, it is determined whether the subject detection unit 210 has detected the pupils of an animal like a dog or cat have been detected in the process of step S301 described above. If the pupils of an animal have been detected, the process proceeds to step S902; otherwise, the process moves to step S903.

Next, in step S902, the camera control unit 207 sets the focus detection range described above so as to cover the size of the detected pupils centered on the position of the pupils and proceeds to step S912 to terminate the processing. Generally, when photographing subjects such as animals or persons, it is desirable for the focus to be on the pupils. For this reason, when the right or left pupil is detected during AF setting, the focus on the pupil can be maintained by setting the AF frame to the detected right or left pupil. When both pupils are detected, the AF frame may be set to the pupil on the near side, the pupil near the center of the screen, or a pupil selected in advance through menu selection.

Next, in step S903, it is determined whether the subject detection unit 210 has detected the face of an animal. If the face of an animal has been detected, the process proceeds to step S904; otherwise, the process moves to step S905. In this embodiment, even if the face cannot be detected, such as when facing backward, if the head can be detected, it is handled as equivalent to the state where the face is detected, and the subsequent processes are performed.

Next, in step S904, the camera control unit 207 sets a focus detection range so as to cover the size of the detected face (or head) of the animal centered on the position of the detected face (or head) and proceeds to step S912 to terminate the processing.

In step S905, it is determined whether the subject detection unit 210 has detected the body (or whole body) of an animal. If the body of an animal has been detected, the process proceeds to step S906; otherwise, the process moves to step S907.

Next, in step S906, the camera control unit 207 sets a focus detection range so as to cover the size of the detected body of the animal centered on the position of the detected body and proceeds to step S912 to terminate the processing.

In step S907, it is determined whether the subject detection unit 210 has detected the pupils of a person.

If the pupils of a person have been detected, the process proceeds to step S908; otherwise, the process moves to step S909.

Next, in step S908, the camera control unit 207 sets a focus detection range so as to cover the size of the detected pupils of the person centered on the position of the detected pupils and proceeds to step S912 to terminate the processing.

In step S909, it is determined whether the subject detection unit 210 has detected the face (or head) of a person. If the face (or head) of a person has been detected, the process proceeds to step S910; otherwise, the process moves to step S911.

Next, in step S910, the camera control unit 207 sets a focus detection range so as to cover the size of the detected face (or head) of the person centered on the position of the detected face (or head) and proceeds to step S912 to terminate the processing.

In step S911, a focus detection range of a predetermined size is set to any position set by the user or a predetermined position, which is performed when the subject detection unit 210 cannot detect a specific area such the pupils or face of an animal or person, and the process proceeds to step S912 to terminate the processing.

In this embodiment, the position stored in advance is the center of the screen, and the size of the focus detection range is set based on a value selected via a menu (large or small) (not shown). However, this is illustrative only.

In this embodiment, for the setting of the focus detection range, multiple focus detection frames are set in a range that is N times the size of a specific area, such as the detected pupils or face. Alternatively, only one focus detection frame may be set in a range that is equal in size to the detected specific area.

The setting of the AF frame based on the size of the pupils or face is not suitable for situations where focusing needs to be performed from a significantly blurred state, because the smaller the size of the detected pupils or face, the smaller the range of the amount of detectable defocus. For this reason, the minimum size of the AF frame to be set may be limited so as not to be smaller than a predetermined size that the focus detection performance can be ensured.

Fig. 10 illustrates the processing procedure of a focus-assist-frame setting process performed during MF setting.

First, in step S1001, it is determined whether the subject detection unit 210 has detected the pupils of an animal such as a dog or cat in the process of step S301 described above. If the pupils of an animal have been detected, the process proceeds to step S1002; otherwise, the process moves to step S1004.

In step S1002, it is determined whether the pupils of the animal detected in step S1001 have been continuously detected for a predetermined time T1. If the pupils have been continuously detected for the predetermined time T1 or more, the process proceeds to step S1003; otherwise, the process moves to step S1004.

Next, in step S1003, the camera control unit 207 sets the focus detection range described above so as to cover the size of the detected pupils of the animal centered on the position of the detected pupils and proceeds to step S1017 to terminate the processing.

Next, in step S1004, it is determined whether the subject detection unit 210 has detected the face (or head) of an animal. If the face (or head) of an animal has been detected, the process proceeds to step S1005; otherwise, the process moves to step S1007.

In step S1005, it is determined whether the face (or head) of the animal detected in step S1004 has been continuously detected for a predetermined time T2. If the face (or head) has been continuously detected for the predetermined time T2 or more, the process proceeds to step S1006; otherwise, the process moves to step S1007.

Next, in step S1006, the camera control unit 207 sets a focus detection range so as to cover the size of the detected face (or head) of the animal centered on the position of the detected face (or head) and proceeds to step S1017 to terminate the processing.

Next, in step S1007, it is determined whether the subject detection unit 210 has detected the body (or whole body) of an animal. If the body of an animal has been detected, the process proceeds to step S1008; otherwise, the process moves to step S1010.

In step S1008, it is determined whether the body of the animal detected in step S1007 has been continuously detected for a predetermined time T3. If the body has been continuously detected for the predetermined time T3 or more, the process proceeds to step S1009; otherwise, the process moves to step S1010.

Next, in step S1009, the camera control unit 207 sets a focus detection range so as to cover the size of the detected body of the animal centered on the position of the detected body and proceeds to step S1017 to terminate the processing.

Next, in step S1010, it is determined whether the subject detection unit 210 has detected the pupils of a person. If the pupils of a person have been detected, the process proceeds to step S1011; otherwise, the process moves to step S1013.

In step S1011, it is determined whether the pupils of the person detected in step S1010 have been continuously detected for a predetermined time T4. If the pupils have been continuously detected for the predetermined time T4 or more, the process proceeds to step S1012; otherwise, the process moves to step S1013.

Next, in step S1012, the camera control unit 207 sets a focus detection range so as to cover the size of the detected pupils of the person centered on the position of the detected pupils and proceeds to step S1017 to terminate the processing.

In step S1013, it is determined whether the subject detection unit 210 has detected the face (or head) of a person. If the face (or head) of a person has been detected, the process proceeds to step S1014; otherwise, the process moves to step S1016.

In step S1014, it is determined whether face (or head) of the person detected in step S1013 has been continuously detected for a predetermined time T5. If the face (or head) has been continuously detected for the predetermined time T5 or more, the process proceeds to step S1015; otherwise, the process moves to step S1016.

Next, in step S1015, the camera control unit 207 sets a focus detection range so as to cover the size of the detected face (or head) of the person centered on the position of the detected face (or head) and proceeds to step S1017 to terminate the processing.

In step S 1016, a focus detection range of a predetermined size is set to any position set by the user or a predetermined position, which is performed when the subject detection unit 210 cannot detect a specific area such as the pupils or face of an animal or person, and the process proceeds to step S1017 to terminate the processing. In this embodiment, the position stored in advance is the center of the screen, and the size of the focus detection range is set to the minimum size as the focus detection range. However, the focus-assist-frame information stored in advance is not limited to the content described in this embodiment and may take any form as long as it does not depart from the scope of the present invention.

Here, the reason for determining whether the detection states continue for the predetermined times T1, T2, T3, T4, and T5 in step S1002, S1005, S1008, S1011, and S1014, respectively, is to determine whether the detection of each specific area is stable. This enables the focus assist frame to be set in the area that is detected first in a stable detection state. For example, if the focus assist frame is set to the pupils or face according to the detection result when the pupils detected in step S1001 are in an unstable condition, the positions of the indicators 502 to 507 vary significantly every time the detection area switches. This makes it difficult to perform focusing in MF operation. For this reason, the focus assist frame is not set in the detection area unless a stable detection condition is reached. This relatively stables the positions of the indicators 502 to 507 for visually expressing the amount and direction of defocus of the focus assist frame, making it easy to perform focusing in MF operation. Here, the unstable condition of the pupils detected in step S1001 is a situation in which the pupils, if detected, are detected only momentarily, and are frequently switched to the face or body.

Here, the pupils are likely to be more unstable for detection than the face or body, because the pupils may be hidden due to changes in the orientation or posture of the subject or the smaller size of the area relative to the screen. Considering this, in this embodiment, the focus assist frame is made more easily and continuously set to the face or body rather than the pupils. For this reason, for example, T1 is set to 0.5 seconds, T2 and T3 are set to 0.1 seconds, T4 is set to 0.5 seconds, and T5 is set to 0.1 seconds. However, the predetermined times T1 to T5 may be set to the same value or different values, or T2 and T3 may be set longer than T1. Incidentally, the longer the time is set, the more stably the detection needs to be continued in order to set the frame in the area. The shorter the time is set, the sooner the frame will be set to a high priority area as long as the detection is performed.

In this embodiment, for both of the AF frame and the focus assist frame, the smaller area (pupils) among the detection areas - pupils, face, and body, if stably detected, is likely to be selected most. In other words, setting the frame to the pupils is given a higher priority. This is based on the idea that it is generally desired to perform focusing at a more detailed part. This is however illustrative only.

In MF operation, it is desirable for the positions of the indicators 502 to 507 that visually represent the amount of defocus and the defocus direction of the focus assist frame to remain stable. For this reason, for the setting of the focus assist frame, unlike the setting of the AF frame, it is determined whether the detection is continued for a predetermined time.

The reason for making it easier to set the focus assist frame to the face or body than the pupils is as follows. The pupils are likely to be unstable for detection, because the pupils may be hidden due to the orientation or posture of the subject or the smaller size of the area relative to the screen. In contrast, the face and body are unlikely to be influenced by the orientation of the subject, and the size of the area relative to the screen is relatively large. For this reason, to make it easier to set the focus assist frame to the face or body than the pupils enable the focus assist frame setting to be set more stably.

Furthermore, in this embodiment, for both of the AF frame and the focus assist frame, the pupils, face, and body of an animal are more likely to be selected than the pupils of a person, face, and body. Alternatively, the AF frame and the focus assist frame may be preferentially set to the pupils or face of a person. For example, selection of person priority or animal priority is allowed on a menu (not shown), and based on the setting, the priority (order of determination) of the detection area in the AF frame and focus-assist-frame setting process may be changed.

In this embodiment, when the subject detection unit 210 cannot detect a specific area such as the pupils or face of an animal or a person, it is determined whether an area with the second priority has been detected. However, this is illustrative only. Even if a specific area cannot be detected, it may be determined whether the area can still be tracked, and only when both detection and tracking are no longer possible, the state of a low-priority area may be checked. The tracking refers to the state where the system transitions from detecting a specific area of the subject to a non-detecting state, and the most likely area where the detection was occurring is estimated based on the information (for example, color information and pattern information) just before the detection was lost, as well as general feature values. In the tracking state, when no specific area is detected in the vicinity of the position tracked for a predetermined period, or the possibility of the specific area becomes low because of low feature values, the tracking state is terminated. When the tracking state is terminated, if another specific area has been detected at a different position from the tracked position, the AF frame or the focus assist frame may be set in the detected area. If there is no other detected area at the time the tracking state is terminated, the AF frame or the focus assist frame may be set at a predetermined position or size recorded in advance in the camera control unit 207, or the position and size at the time the tracking state is terminated may be held and set.

Frame Display Process according to First Embodiment

Next, the display forms of frames for showing the positions and sizes of the frames set in the AF-frame setting process of step S303 and the focus-assist-frame setting process of step S304 to the user will be described with reference to Figs. 11A to 11F.

Figs. 11A to 11F are conceptual diagrams of display forms of the AF frame and the focus assist frame when the pupils, face, and the whole body (body) of a dog are detected. Fig. 11A to 11C schematically illustrate the display forms of the AF frame set in the AF-frame setting process of step S303 described above. In Figs. 11A to 11C, reference numeral 1101 denotes the area of the detected pupil of an animal, 1102 denotes the area of the detected face of the animal, and 1103 denotes the area of the whole body of the animal. Fig. 11A illustrates a state where the pupil, face, and whole body are each detected, in which an AF frame (displayed in angle frame) is set and displayed in the pupil area 1101 with a high priority for focusing. Fig. 11B illustrates a state where the pupil is not detected, but the face and the whole body are detected, in which an AF frame is set and displayed in the face area 1102 with a high priority. Fig. 11C illustrates a state where the pupil and face are not detected, but the whole body is detected, in which an AF frame is set and displayed in the whole body area 1103.

Figs. 11D to 11F schematically illustrate the display forms of the focus assist frame set in the focus-assist-frame setting process of step S304 described above. In Figs. 11D to 11F, reference numeral 1101, 1102, and 1103 denote the same areas as in Figs. 11A to 11C described above. Fig. 11D illustrates a state where the pupil, face, and whole body are detected, in which a focus assist frame is set and displayed in the pupil area 1101 with a high priority for focusing. Fig. 11E illustrates a state where the pupil is not detected, but the face and the whole body are detected, in which a focus assist frame is set and displayed in the face area 1102 with a high priority. Fig. 11F illustrates a state where the pupil and face are not detected, but the whole body is detected, in which a focus assist frame is set and displayed in the whole body area 1103.

The display forms of the AF frame and the focus assist frame are not limited to the above examples.

Second Embodiment

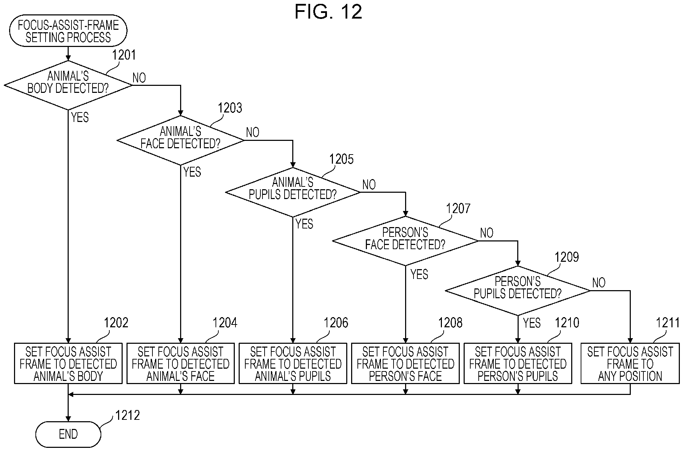

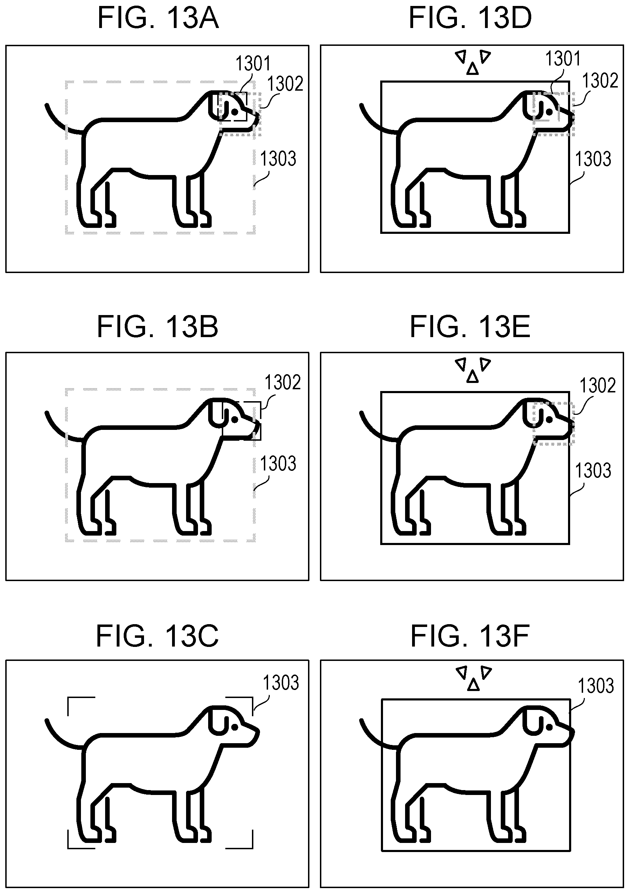

Next, a second embodiment will be described with reference to Fig. 12 and Figs. 13A to 13F.

The same items as those in the first embodiment are denoted by the same reference numerals, and their descriptions will be omitted.

AF-frame Setting Process and Focus-Assist-Frame Setting Process according to Second Embodiment

In the first embodiment, it is determined whether stable detection has been performed in the focus-assist-frame display process during the MF setting of step S304 with reference to the duration of detection. The focus assist frame is set to stable one of the pupils, face, and body. In contrast, in this embodiment, the focus assist frame is set according to the priority determined based on the size of the detection area. Specifically, the order of priority is set in descending order of fundamental detection size - body > face > pupils; for example, the focus assist frame is primarily set to the body, even if the pupils or face is detected.

Fig. 12 illustrates the processing procedure of the focus-assist-frame setting process during MF setting (step S304 in Fig. 3) according to the second embodiment.

First, in step S1201, it is determined whether the subject detection unit 210 has detected the body (or whole body) of an animal such as a dog or cat in the process of step S301 described above.

If the body of an animal has been detected, the process proceeds to step S1202; otherwise, the process moves to step S1203.

Next, in step S1202, the camera control unit 207 sets the focus detection range described above so as to cover the size of the detected body of the animal centered on the position of the detected body and proceeds to step S1212 to terminate the processing. The reason why determination of the detection of body is given the highest priority is as follows. Among the pupils, face, and body, the body is less influenced by the orientation and posture of the subject and can therefore be detected with stability. For this reason, setting the focus assist frame primarily to the body, as in this embodiment, minimizes the switching of specific areas, enabling a stable display of the focus assist frame. Furthermore, even in a situation where a subject with vigorous movement, such as animals, comes off the frame, setting and displaying the focus assist frame to a large part among multiple detection parts has less influence than setting and displaying the focus assist frame to a small part.

Next, in step S1203, it is determined whether the subject detection unit 210 has detected the face of an animal. If the face of an animal has been detected, the process proceeds to step S1204; otherwise, the process moves to step S1205.

Next, in step S1204, the camera control unit 207 sets a focus detection range so as to cover the size of the detected face of the animal centered on the position of the detected face and proceeds to step S1212 to terminate the processing.

In step S1205, it is determined whether the subject detection unit 210 has detected the pupils of an animal. If the pupils of an animal have been detected, the process proceeds to step S1206; otherwise, the process moves to step S1207.

Next, in step S1206, the camera control unit 207 sets a focus detection range so as to cover the size of the detected pupils of the animal centered on the position of the detected pupils and proceeds to step S1212 to terminate the processing.

In step S1207, it is determined whether the subject detection unit 210 has detected the face of a person. If the face of a person has been detected, the process proceeds to step S1208; otherwise, the process moves to step S1209.

Next, in step S1208, the camera control unit 207 sets a focus detection range so as to cover the size of the detected face of the person centered on the position of the detected face and proceeds to step S1212 to terminate the processing.

In step S1209, it is determined whether the subject detection unit 210 has detected the pupils of a person. If the pupils of a person have been detected, the process proceeds to step S1210; otherwise, the process moves to step S1211.

Next, in step S1210, the camera control unit 207 sets a focus detection range so as to cover the size of the detected pupils of the person centered on the position of the detected pupils and proceeds to step S1212 to terminate the processing.

In step S1211, a focus detection range of a predetermined size is set to any position set by the user or a predetermined position, which is performed when the subject detection unit 210 cannot detect a specific area such the pupils or face of an animal or person, as in the first embodiment, and the process proceeds to step S1212 to terminate the processing.

Frame Display Process according to Second Embodiment

Next, the display forms of a focus assist frame according to a second embodiment will be described with reference to Figs. 13A to 13F.

Figs. 13A to 13F are conceptual diagrams of display forms of the AF frame and the focus assist frame when the pupils, face, and the whole body (body) of a dog are detected. Fig. 13A to 13C schematically illustrate the display forms of the AF frame. Reference numeral 1301 denotes the area of the detected pupil of an animal, 1302 denotes the area of the detected face of the animal, and 1303 denotes the area of the whole body of the animal. Also in the second embodiment, the setting and displaying of the AF frame are the same as those of the first embodiment, and their descriptions will be omitted.

Figs. 13D to 13F schematically illustrate the display forms of the focus assist frame set according to the second embodiment. In the drawings, reference numeral 1301, 1302, and 1303 denote the same areas as in Figs. 13A to 13C described above. Fig. 13D illustrates a state where the pupil, face, and whole body are detected, in which a focus assist frame is set and displayed in the body area 1303 with a high priority for focusing. Fig. 13E illustrates a state where the pupil is not detected, but the face and the whole body are detected, in which a focus assist frame is set and displayed in the body area 1303 with a high priority. Fig. 13F illustrates a state where the pupil and face are not detected, but the whole body is detected, in which a focus assist frame is set and displayed in the whole body area 1303.

In this embodiment, the description assumes an angle of view at which the body of an animal can be detected at the correct size. However, depending on the shooting magnification (focal length/subject distance), the body (or whole body) of an animal does not fit within the angle of view and therefore may not be detected or, if detected, may not be detected at the correct size. For this reason, when the shooting magnification is high, the step S1201 of determining whether the body has been detected is not performed, and the processing may start from the determination in step S1203 onward. In other words, when the shooting magnification is high, the focus assist frame may be set and display to the face rather than the body.

In the above embodiment, the setting and display of the focus assist frame are performed preferably using the detection result of the body with little change in position and size, thereby reducing variations in the position and size of the focus assist frame. However, for switching between the pupils and face with little change in detection position and size compared with switching between the pupils and body, or the face and body with large changes, the setting and display may be performed depending on the detection results of the pupils and face.

In this embodiment, the similar process is performed for each of the case where an animal is detected and the case where a person is detected. This is illustrative only. The frame stetting and display processes during AF setting and MF setting may be changed only in detecting an animal.

Having described the case where the detection subject is a single individual, this embodiment is also applicable to the case of detecting multiple animals or persons. However, in the case where multiple animals or persons are detected, the subject to be focused is only one of them. For this reason, the main subject is selected from multiple subjects using a known method (for example, a subject close to the center of the screen and having a large detection size) is selected, and only the main subject is subjected to AF setting or focus assist frame setting.

In this case, the frame may be displayed for a subject other than the main subject so that it can be seen that the subject other than the main subject is detected. At that time, the frame may be set to a part that is detected with stability as in the setting and display of the focus assist frame in the first embodiment, or a part with a large size, as in the second embodiment.

Through the above processing, in a case where the subject has multiple parts (characteristic portions), and the detection part is switched according to the orientation or posture of the subject or changes in photography environment, the quickly detected part can be focused during AF setting. During MF setting, displaying the focal state (a focus assist frame) at a stable position based on the subject detection state makes focusing easier.

According to the embodiments of the present invention, a stable focal state guide can be displayed.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

**Claims**

1. A display control apparatus comprising:

   display control means (207) arranged to display a live view image captured by image capturing means, and to display, superposed on the live view image, a display item representing a subject whose focal state is to be detected;
   detecting means (210) arranged to detect a plurality of parts of the subject in the live view image;
   selecting means (207) arranged to select one part from among the plurality of parts detected by the detecting means (210), based on a priority; and
   focus detecting means (204) arranged to detect a focal state in a focus detection area corresponding to the part selected by the selecting means (207),
   wherein the selecting means (207) changes a selection method based on the priority between automatic focus adjustment and focus adjustment through manual focus operation.

2. The display control apparatus according to Claim 1, further comprising:

   determining means (207) arranged to determine whether the detection of each of the plurality of parts is stable, wherein the selecting means (207) makes it less likely to select a part that is determined by the determining means (207) to be unstable.

3. The display control apparatus according to Claim 1, wherein the selecting means (207) makes it less likely to select a part that is determined to be smaller than a predetermined size from among the plurality of parts.

4. The display control apparatus according to Claim 3, wherein the predetermined size is changed depending on a shooting magnification.

5. The display control apparatus according to Claim 1, further comprising:

calculating means (207) arranged to calculate variations in position or size of the plurality of parts, wherein the selecting means (207) makes it less likely to select a part with a significant change in position or size.

6. A control method for a display control apparatus, the method comprising:

displaying a live view image captured by image capturing means, and displaying, superposed on the live view image, a display item representing a subject whose focal state is to be detected;
detecting a plurality of parts of the subject in the live view image;
selecting one part from among the plurality of parts detected through the detection, based on a priority; and
detecting a focal state in a focus detection area corresponding to the part selected through the selection, wherein, in the selection, a selection method based on the priority is changed between automatic focus adjustment and focus adjustment through manual focus operation.

7. A non-transitory computer-readable storage medium storing a program that when executed on a computer causes the computer to perform the control method according to Claim 6.

FIG. 1

# FIG. 2A

PIXEL CONFIGURATION FOR NON-IMAGING-PLANE PHASE DIFFERENCE METHOD

| R | Gr | R | Gr | R | Gr | R | Gr | R | Gr |
|---|----|---|----|---|----|---|----|---|----|
| Gb | B | Gb | B | Gb | B | Gb | B | Gb | B |

# FIG. 2B

PIXEL CONFIGURATION FOR IMAGING-PLANE PHASE DIFFERENCE METHOD

| R A | R B | Gr A | Gr B | R A | R B | Gr A | Gr B | R A | R B | Gr A | Gr B | R A | R B | Gr A | Gr B | R A | R B | Gr A | Gr B |
|-----|-----|------|------|-----|-----|------|------|-----|-----|------|------|-----|-----|------|------|-----|-----|------|------|
| Gb A | Gb B | B A | B B | Gb A | Gb B | B A | B B | Gb A | Gb B | B A | B B | Gb A | Gb B | B A | B B | Gb A | Gb B | B A | B B |

# FIG. 3

```
        ( FRAME DISPLAY CONTROL )
                    |
                    |          S301
                    ↓
        [ SUBJECT DETECTING PROCESS ]
                    |
                    |       S302
                    ↓
                  / AF? \ ——— MF ————————————————┐
                  \     /                          |
                    |                              |
                   AF                              |
                    |    S303                      |   S304
                    ↓                              ↓
        [ AF-FRAME SETTING PROCESS ]   [ FOCUS-ASSIST-FRAME
                    |                      SETTING PROCESS  ]
                    |←——————————————————————————————┘
                    |   S305
                    ↓
        [ FOCUS DETECTING PROCESS ]
                    |    S306
                    ↓
        [ FRAME DISPLAY PROCESS ]
                    |
                    ↓
                ( END )
```

FIG. 4A

FIG. 4B

FIG. 4C

FIG. 5A

FIG. 5B

FIG. 5C

# FIG. 6

```
        ┌─────────────────────┐
        │       FOCUS         │
        │ DETECTING PROCESS   │
        └─────────────────────┘
                  │
                  ▼
        ┌─────────────────────┐
        │  OBTAIN IMAGE DATA  │────── S601
        └─────────────────────┘
                  │
                  ▼
        ┌─────────────────────┐
        │  CALCULATE AMOUNT   │────── S602
        │   OF CORRLATION     │
        └─────────────────────┘
                  │
                  ▼
        ┌─────────────────────┐
        │     CALCULATE       │
        │ VARIATION IN AMOUNT │────── S603
        │   OF CORRELATION    │
        └─────────────────────┘
                  │
                  ▼
        ┌─────────────────────┐
        │     CALCULATE       │
        │    AMOUNT OF        │────── S604
        │   OUT-OF-FOCUS      │
        └─────────────────────┘
                  │
                  ▼
        ┌─────────────────────┐
        │     CALCULATE       │────── S605
        │    RELLIABILITY     │
        └─────────────────────┘
                  │
                  ▼
        ┌─────────────────────┐
        │    CONVERT TO       │────── S606
        │     DEFOCUS         │
        └─────────────────────┘
                  │
                  ▼
        ┌─────────────────────┐
        │        END          │
        └─────────────────────┘
```

FIG. 7A

FIG. 7B

FIG. 7C

FIG. 8A

FIG. 8B

FIG. 8C

FIG. 8D

FIG. 9

FIG. 10

FOCUS-ASSIST-FRAME
SETTING PROCESS

1001
ANIMAL'S
PUPILS DETECTED?
NO

YES 1002
HAVE PUPILS BEEN
CONTINUOUSLY DETECTED
FOR PREDETERMINED
TIME T1?
NO

1004
ANIMAL'S
FACE DETECTED?
NO

YES 1005
HAS FACE BEEN
CONTINUOUSLY DETECTED
FOR PREDETERMINED
TIME T2?
NO

YES

1007
ANIMAL'S
BODY DETECTED?
NO

YES 1008
HAS BODY BEEN
CONTINUOUSLY DETECTED
FOR PREDETERMINED
TIME T3?

YES

1010
PERSON'S
PUPILS DETECTED?
NO

YES 1011
HAVE PUPILS BEEN
CONTINUOUSLY DETECTED
FOR PREDETERMINED
TIME T4?
NO

YES

1013
PERSON'S
FACE DETECTED?
NO

YES 1014
HAVE FACE BEEN
CONTINUOUSLY DETECTED
FOR PREDETERMINED
TIME T5?
NO

YES

1003
SET FOCUS ASSIST FRAME TO
DETECTED ANIMAL'S PUPILS

1006
SET FOCUS ASSIST FRAME TO
DETECTED ANIMAL'S FACE

1009
SET FOCUS ASSIST FRAME TO
DETECTED ANIMAL'S BODY

1012
SET FOCUS ASSIST FRAME TO
DETECTED PERSON'S PUPILS

1015
SET FOCUS ASSIST FRAME TO
DETECTED PERSON'S FACE

1016
SET FOCUS ASSIST FRAME TO
ANY POSITION

1017
END

## FIG. 11A

## FIG. 11D

## FIG. 11B

## FIG. 11E

## FIG. 11C

## FIG. 11F

# FIG. 12

FOCUS-ASSIST-FRAME
SETTING PROCESS

1201
ANIMAL'S
BODY DETECTED? — NO

YES

1203
ANIMAL'S
FACE DETECTED? — NO

YES

1205
ANIMAL'S
PUPILS DETECTED? — NO

YES

1207
PERSON'S
FACE DETECTED? — NO

YES

1209
PERSON'S
PUPILS DETECTED? — NO

YES

| 1202 | 1204 | 1206 | 1208 | 1210 | 1211 |
|---|---|---|---|---|---|
| SET FOCUS ASSIST FRAME TO DETECTED ANIMAL'S BODY | SET FOCUS ASSIST FRAME TO DETECTED ANIMAL'S FACE | SET FOCUS ASSIST FRAME TO DETECTED ANIMAL'S PUPILS | SET FOCUS ASSIST FRAME TO DETECTED PERSON'S FACE | SET FOCUS ASSIST FRAME TO DETECTED PERSON'S PUPILS | SET FOCUS ASSIST FRAME TO ANY POSITION |

1212
END

26

## FIG. 13A

## FIG. 13D

## FIG. 13B

## FIG. 13E

## FIG. 13C

## FIG. 13F

# FIG. 14A

DISPLAY ITEM REPRESENTING CURRENT IN-FOCUS STATE

ITEM REPRESENTING REFERENCE POSITION (IN-FOCUS POSITION)

BAR INDICATING RANGE FROM FRONT FOCUS TO BACK FOCUS

# FIG. 14B

DISPLAY IN WHICH DISPLAY ITEM REPRESENTING CURRENT IN-FOCUS STATE OVERLAPS WITH ITEM REPRESENTING REFERENCE POSITION (IN-FOCUS POSITION)

BAR INDICATING RANGE FROM FRONT FOCUS TO BACK FOCUS

Europäisches
Patentamt

European
Patent Office

Office européen
des brevets

# EUROPEAN SEARCH REPORT

**Application Number**

EP 25 16 1865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/238745 A1 (YOKOZEKI MAKOTO [JP] ET AL) 1 August 2019 (2019-08-01) | 1-4,6,7 | INV.<br>H04N23/61 |
| Y | * claim 1 *<br>* figures 11, 12A, 12B, 14A-14C *<br>* paragraph [0065] *<br>* paragraph [0094] *<br>* paragraph [0125] *<br>* paragraph [0158] *<br>* paragraph [0169] - paragraph [0172] *<br>----- | 5 | H04N23/611<br>H04N23/62<br>H04N23/63<br>H04N23/67 |
| Y | US 2016/156835 A1 (OGASAWARA KOTARO [JP] ET AL) 2 June 2016 (2016-06-02)<br>* claim 1 *<br>----- | 5 | |

**TECHNICAL FIELDS
SEARCHED (IPC)**

H04N

The present search report has been drawn up for all claims

| Place of search | Date of completion of the search | Examiner |
|---|---|---|
| The Hague | 17 June 2025 | Benzeroual, Karim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 1865

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | Publication date |
|---|---|---|---|
| US 2019238745 A1 | 01-08-2019 | CN 106060373 A | 26-10-2016 |
| | | DE 102016105764 A1 | 06-10-2016 |
| | | GB 2539996 A | 04-01-2017 |
| | | US 2016295100 A1 | 06-10-2016 |
| | | US 2019238745 A1 | 01-08-2019 |
| US 2016156835 A1 | 02-06-2016 | CN 105378534 A | 02-03-2016 |
| | | EP 3015893 A1 | 04-05-2016 |
| | | JP 5829360 B2 | 09-12-2015 |
| | | JP WO2015050008 A1 | 09-03-2017 |
| | | US 2016156835 A1 | 02-06-2016 |
| | | WO 2015050008 A1 | 09-04-2015 |

EPO FORM P0459

For more details about this annex : see Official Journal of the European Patent Office, No. 12/82

**EP 4 626 010 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016197179 A
- JP 2022128652 A